# EUROPEAN PATENT APPLICATION

(11) **EP 4 336 292 A1**
(43) Date of publication of application: **13.03.2024**
(21) Application number: 22194361.6
(22) Date of filing: 07.09.2022
(51) Int. Cl.: G05B 23/02, G05B 19/042, G05B 13/02, G05B 13/04

(54) **METHOD FOR PROCESS AUTOMATION OF A PRODUCTION PROCESS**

(71) Applicant: BASF SE, 67056 Ludwigshafen am Rhein (DE)
(72) Inventor: Fernandez Ramirez, Gimmy Alex, 67071 Ludwigshafen (DE); Hartmann, Michael, 49448 Lemfoerde (DE)
(74) Representative: Eisenführ Speiser

(57) **Abstract**

The invention refers to a method 200 for process automation of a production process referring to an extruded foaming thermoplastic polyurethane process for producing a polyurethane foam. The method 200 comprises providing 210 process data indicative of at least a part of the performed production process for producing the polyurethane foam. Further, a property determination model is utilized 220 to determine a material property of the produced polyurethane foam, wherein the material property is indicative of at least one characteristic of the produced polyurethane foam and wherein the property determination model is a data driven model adapted to determine the material property based on the process data. Control actions are generated 230 for controlling the production process of the polyurethane foam based on the determined material property. The method allows for an improved automatic control of the production process referring to an extruded foaming thermoplastic polyurethane process.

## Description

### FIELD OF THE INVENTION

The invention refers to a computer-implemented method, an apparatus and a computer program product for process automation of a production process. Moreover, the invention refers to a system for automatic production utilizing any of the above method, apparatus, or computer program product. Further, the invention refers to a training method, training apparatus and computer program product for parameterizing a property determination model utilized in the above method, apparatus and computer program product. Moreover, the invention refers to control data generated according to the method, apparatus and computer program product for process automation.

### BACKGROUND OF THE INVENTION

Controlling the performance of an extruded foaming thermoplastic polyurethane process in an automatic process controlling can be a challenging task. Generally, process parameters that control the performing of this process are often fixed during a commissioning of a respective production plant and set according to predetermined design specifications for the foam to be produced. The compliance with these set process parameters is then often controlled by a process automation system that allows to control the respective systems, for instance, heaters, mixers, etc. to provide the respective conditions needed for the foam production. In cases in which certain precursors to the production of a specified foam change, for instance, if a quality of a prepolymer utilized for producing the foam changes, adjustments in the process variables are necessary and are often implemented based on the experience of respective experts by hand. However, the foam produced by the process can still deviate from the target specification, wherein then the process of noticing such a deviation, finding its cause and adapting the process variables can be time-consuming, costly and often leads to previous production of waste before the process variables are adapted. Thus, it would be advantageous if a method could be provided that allows for an automatic adaptation of process variables that is objective, i.e. is not based on the experience of an expert, and generally improves the foam production, for instance, leads to producing less wasted foam and to less downtime of the production.

### SUMMARY OF THE INVENTION

It is an object of the present invention to provide a computer-implemented method, an apparatus and a computer program product that allow for an improved automatic control of the production process referring to an extruded foaming thermoplastic polyurethane process for producing a polyurethane foam. Moreover, it is a further object of the invention to provide a training method, a training apparatus and a computer program product that allows for parameterizing a property determination model that can be utilized in the method, apparatus and computer program product for improving the production process of a polyurethane foam.

In a first aspect of the invention a computer-implemented method for process automation of a production process referring to an extruded foaming thermoplastic polyurethane process for producing a polyurethane foam is presented, wherein the method comprises a) providing process data indicative of at least a part of the performed production process for producing the polyurethane foam, b) utilizing a property determination model to determine a material property of the produced polyurethane foam, wherein the material property is indicative of at least one characteristic of the produced polyurethane foam and wherein the property determination model is a data driven model adapted to determine the material property based on the process data, and c) generating control actions for controlling the production process of the polyurethane foam based on the determined material property.

Since current process data is utilized in a property determination model to predict at least one material property of the produced polyurethane foam, deviations from a respective target property of the polyurethane foam can be noticed very fast and control actions can be generated for correcting those deviations. In particular, the possibility to directly predict a foam property and control the production accordingly becomes important. Even if the property is measured online the measurements do not provide direct information about the influence of the process parameters as a model does. In the practice measurements are not performed directly after the production, but later in the production life circle of a product utilizing the produced foam. In this case the invention prevents that whole batches of product are produced without meeting the target properties before noticing. Accordingly, the control process becomes more efficient, in particular, much faster, since it is not necessary to wait for respective measurements of the material property of the foam, and/or respective productions of waste foam can be avoided. Moreover, this method allows to decrease the role of human experience in the controlling of the production process.

Generally, the computer-implemented method can be realized and performed by any hardware and/or software or combination thereof that provides the respective functions of the method as defined above. In particular, the method can be performed by one or more computing devices, for example, can be performed by only one general or dedicated computing device, or can be performed in distributed computing on a plurality of computing devices, for instance, in form of cloud computing or a distributed network application. Utilizing distributed computing has the advantage that data can be received from any location of the network and that the process can also be provided at least in part at all communicatively coupled devices having access to the distributed computing. This allows to also include data, for instance, target property values or measured property values from customers utilizing the produced foam. Moreover, the customer can even directly access the method via the distributed computing network, for instance, to directly determine control actions based on their preferred foam properties.

The production process refers to an extruded foaming thermoplastic polyurethane process for producing a polyurethane foam. Generally, the foaming process can consist of an extruding step in which one or more blowing agents, chain extender, and nucleation additives are mixed with the polymeric material. Optionally, after this step the foamed polymer is pelletized and decompressed producing a pelletized polyurethane foam. In particular, such an extruding foaming thermoplastic polyurethane process comprises a mixing step, an extrusion step, a decompression step and a cooling step. However, also further steps can be part of the extruded foaming thermoplastic polyurethane process depending on the respective setup of this process, for instance, a further pelletizing step can be provided for producing a pelletized foam.

In a first step the method comprises providing process data indicative of at least a part of the performed production process for producing the polyurethane foam. In particular, the process data can refer to any data that is indicative of a currently performed production process, for example, can comprise control data utilized for controlling the performed production process, for instance, by defining the process variables, measurement data from measurements performed during the production process, and soft sensor data referring to predicted measurements. In this context process variables refer to variables that can be manipulated and set during the process in order to receive a polyurethane foam with predetermined properties. For example, process variables can refer to a temperature, a ratio between specific materials, a mixing speed, a pressure profile, etc. The measurement data can generally be measured by any sensor being part of the production equipment or provided in the environment of the production equipment, wherein the quantity measured can have an influence on the production process. The soft sensor data is preferably derived from measured sensor data based on known or learned functions between the measured quantities and the derived quantities. Such derived measurement data is, in particular, used in cases in which it is not possible or at least costly to provide a respective sensor for the derived quantity. Preferably, the process data is indicative of the process performed during at least one of the mixing step, the extrusion step, the decompression step and the cooling step of the production process. Optionally, the process data can further be indicative of the processes performed by the pelletizer. In particular, it is preferred that the provided process data comprise quantities that are generally known to influence the material properties of the produced polyurethane foam. However, since in complex production environments, like in the production of polyurethane foam, not all complex relations between quantities and the material properties of the foam are predictable, the process data can also comprise further quantities for which a relation to the material properties of the foam is not known already. In this case it becomes possible to determine the relevant process data quantities in a learning process independent of previous knowledge. Generally, the provided process data comprises quantities with which the property determination model has been trained to determine the material property. Accordingly, the providing of the process data can also comprise a selection of suitable process data from all the available process data such that the property determination model can determine the material property of the produced polyurethane foam. However, the selecting can also be performed when providing the process data as input to the property determination model and in the providing step all available process data is provided. The process data can be provided, for instance, via input unit configured to receive the respective process data, for instance, from a storage or as input by a user. However, it is preferred that the process data is provided via an interface unit that is configured to directly interface, for example, with a process automating system controlling the production process and/or with one or more sensors, for instance, also soft sensors, to directly receive respectively measured process data. In a preferred embodiment the process data comprise at least one of a ratio between blowing agent and polymer, a ratio between talc and polymer, a rotational speed of an extruder, a temperature profile inside an extruder, and a pressure profile inside an extruder. Moreover, if a pelletizer is present the process data can also comprise at least one of a flow velocity through the pelletizer and a rotation speed of the cutting disc. It has been found by the inventors that providing at least one of the above quantities as part of the process data allows for a particularly accurate determination of the material property of the polyurethane foam.

In a further step the method comprises utilizing at least one property determination model to determine at least one material property of the produced polyurethane foam. Generally, the material property is indicative of at least one characteristic of the produced polyurethane foam. In particular, it is preferred that determined material property refers to at least one of a foam bulk density, a tensile strength and a shape parameter. These quantities have the most influence on the technical application possibilities for the produced foam and thus are often utilized for characterizing the produced foam. However, the material property can also refer to a property of the polyurethane foam in a final product. For example, if the polyurethane foam is to be utilized in a sole of a shoe, the material property can also refer to a material property of the sole of the shoe that is influenced at least partly by the utilized polyurethane foam.

The property determination model is a data driven model adapt to determine the material property based on the process data. Generally, the property determination model can refer to any function that allows to determine a material property of a respectively produced polyurethane foam based on the provided process parameters. However, the property determination model can also be a more complex model, for instance, can be based on known machine learning algorithms, for example, the property determination model can utilize as machine learning algorithm a linear regression, a neural network, a polynomial, or an Automated Learning of Algebraic Models for Optimization (ALAMO) regression algorithm. Moreover, also decision tree regressions or random forest algorithms can be utilized. Generally, the data driven property determination model can be trained based on historical data, in particular, based on historical measurements of the material properties of the produced polyurethane foam associated with respective process data of the production process of the respective polyurethane foam. This allows to train a property determination model specifically for a respective production site and the specific setup of the respective production site such that the property determination model allows for a very accurate determination of the property of the produced foam by the respective production site.

Further, the method comprises generating control actions for controlling the production process of the polyurethane foam based on the determined material property. In particular, the control actions can refer to control data that can be directly utilized in a process automation system to automatically control the production process, for example, to set one or more process variables. However, in some cases the control actions can also refer to recommended actions that can be provided to a user, in particular, for cases in which it is necessary to manually adjust a process variable, for example, if the respective process variable is not controlled by the process automating system or if the adjusting can only be performed with a manual adjusting of one or more components of a production system. Moreover, the generated control actions can be generated such that they lead to a direct controlling, for example, directly interfere with the control processes of the production process, or to an indirect controlling, for instance, the control actions can first be interpreted by a process automating system or can first be presented to a user for verification before the implementation of the control actions. Generally, the controlling of the production process refers to adjusting or amending one or more process variables of the production process, which leads to an amending of the respective production process and thus also to a change in the material property of the produced polyurethane foam.

In particular, it is preferred that the control actions are generated such that the determined material property of the polyurethane foam fulfil predetermined criteria. Accordingly, the generating of the control actions can be based on predetermined rules that indicate which process variables have to be adjusted for which case of determined material property, for example, if the determined material property does not fulfil a respective predetermined criterion. In particular, these predetermined rules can be based on theoretical considerations, human experience, or can preferably refer to learned predetermined rules. In particular, such rules can be learned based on previous controlling of the production process, for instance, based on previous measurements of the material property of the produced polyurethane foam associated with corresponding control actions.

In a preferred embodiment, the method further comprises a) providing a target material property that has to be met by the produced polyurethane foam, b) comparing the determined material property with the target material property, and c) generating the control actions based on the result of the comparison. In particular, the target material property can refer to a predetermined criterion that should be fulfilled by the determined material property. The target property can be any of the material properties of the polyurethane foam or can be derivable from one or more of the material properties of the polyurethane foam. In particular, the target material property can be provided by a customer of the polyurethane foam based on the intended product in which the foam should be utilized. For example, a customer can provide the target material property via a communication network, like the internet, or utilize a local communication property. The comparison preferably comprises determining if the determined material property or a property derivable from one or more determined material properties meet the target property within predetermined limits. The control actions are then generated, in particular, if the comparison results in a deviation between the determined material property and the target property, wherein the control actions are then generated such that this deviation is minimized, for example, by utilizing predetermined rules. In a preferred embodiment, the generating of the control actions based on the comparison comprises the use of an optimization routine configured to minimize a deviation between the determined material property and the target material property with respect to one or more process variables of the production process. Preferably, the optimization routine allows not only to optimize with respect to one process variable at a time but allows for an optimization with respect to more than one process variable, preferably, all process variables of the production process. Moreover, it is preferred that the optimization routine allows for more than one optimization objective. In particular, one optimization objective can refer to the minimization of the deviation between the determined material property and the target property. However, also additional optimization objectives can be utilized, for example, a minimization of the utilized resources during the production, a maximization of an output amount of produced polyurethane foam, etc. Thus, it is preferred that the optimization routine refers to a multi-variable and also multi-objective optimization routine that allows for an optimization not only with respect to one objective but with respect to more than one objective. For example, the optimization routine can refer to optimizing an objective function, wherein the optimization can refer to a Pareto-optimization if more than one objective is utilized. In particular, the optimization routine can utilize the property determination model in order to predict a material property based on amended process data, during an iterative optimization algorithm. Preferably, the optimization is constrained and the values for the constraints are given by technical and safety limits. In particular these technical and safety limits can be predetermined based on the technical specifications of the production site, manuals for one or more of the machines utilized in the production and/or specifications of the materials used during the production. The constraints can, for example, be implemented in an objective function as penalty terms, or can be used to select between different solutions a solution that fulfils the respective constrains most closely. Suitable optimization techniques to solve the constrained optimization problem are for instance Lagrange multiplier method, quadratic programming, or interior point methods, among others. Generally, already known algorithms and methods for solving optimization problems, in particular, utilizing the above methods, can be used.

In an embodiment, the method further comprises providing, for instance, via a sensor interface, a measured material property of the produced polyurethane foam and comparing the measured material property with the determined material property and, if the determined material property lies outside predetermined limits around the measured material property, generating control signals that cause a retraining of the property determination model. For example, the measured material property can be provided in accordance with regular product quality checks in which one or more properties of a product are measured in predetermined time intervals, for example, every hour, every day or every few days. Thus, such quality checks allow also to check an accuracy of the utilized property determination model in regular intervals and to cause a retraining of the property determination model if the quality and the respective accuracy is not met. Moreover, the material properties can be measured on-site or off-site, for example, after the foam has been received by a customer, as part of a customer quality check. A customer can then, for example, provide the results of a quality check, in particular, the measured material properties to the apparatus as user feedback utilizing, for instance, a communication network that allows the customer to communicate with the apparatus. Thus, the production of a product can incorporate not only the on-site data but also data measured by a later customer of the product such that this data measured later is not lost, but can be utilized for optimizing the foam production. In particular, the property determination model can be retrained taking into account the measurements that lead to retraining of the property determination model. Moreover, the retraining can also utilize historical training data that has not been used before for the training of the property determination model. Accordingly, if new situations occur during the production of the polyurethane foam that might not have been represented in the previously utilized training data leading to an inaccurate property determination model, these situations can be taken into account in the retraining process leading on the long run to an improved accuracy of the property determination model in more and more situations.

In an embodiment, the method further comprises providing, for instance, via an input unit, precursor data indicative of precursor properties of at least one polymeric material utilized in the production process for producing the polyurethane foam and wherein the utilized property determination model is adapted to determine the material property further based on the precursor data. A precursor in this context refers to a polymeric material that is utilized during the production of the polyurethane foam. In particular, it is preferred that the precursor properties comprise at least one of a melting point of the polymeric material, a polymer melt flow rate, a melt flow ratio, a molecular weight distribution, a density, a bulk density, an amount of free isocyanate (NCO), a tear strength, an elongation to break and a tensile strength. Generally, such precursor properties can change if for instance, the quality of the utilized polymeric material changes. Changes in the quality of the polymeric material can be based on the production source of the polymeric material but can also be caused by the storage or by ambient conditions of the polymeric material. In some cases the precursor properties can have a strong influence on the result of the production process of the polyurethane foam such that taking into account the precursor data allows for a more accurate determination of the material properties, in particular, if changes of the precursor properties are to be expected. Preferably the precursor data is provided based on measurements of the respective polymeric material utilized in the production process but can also be derived, for instance, based on production information on the production of the polymeric material or based on environmental information on the storage environment of the polymeric material.

In an embodiment, the method further comprises providing, for example, via an input unit, ambient data indicative of ambient conditions to which the polymeric material utilized in the production process is exposed for a certain time period and wherein the utilized property determination model is adapted to determine the material property further based on the ambient data. Since as already mentioned above, the ambient conditions can have an influence on the property of the utilized polymeric material, the ambient conditions can also directly be utilized as input for the property determination model to determine the material property accordingly. Generally, the ambient data can refer to any of a temperature, an amount of a specific gas in the environment, a humidity, a gas exchange, etc. In a preferred embodiment, the ambient data is indicative of a humidity condition to which the polymeric material utilized in the production process is exposed. The humidity can have a strong influence on the polymeric material and thus also can strongly influence the polyurethane foam production process. For example, in a preferred production process two kinds of precursors, i.e. polymeric materials, are utilized wherein one is non-reactive while the other contains NCO reactive groups. In particular, these groups are very sensitive to water, such that the humidity in an environment of this precursor can have a strong influence on the properties of the precursor and thus also on the foam production process. Thus, in particular, if such a reactive precursor is utilized, it is preferred that the property determination model is configured to also take the humidity into account for predicting the material property.

In a further aspect of the invention a training method for parameterizing a property determination model is presented, wherein the training method comprises a) receiving historical training data comprising a plurality of process data and corresponding measured material properties of previously produced polyurethane foams, b) utilizing the received historical training data for parameterizing a property determination model such that the parameterized property determination model is adapted to determine a material property of the polyurethane foam based on process data, and c) outputting the parameterized property determination model.

In a further aspect of the invention, an apparatus for process automation of a production process referring to an extruded foaming thermoplastic polyurethane process for producing a polyurethane foam is presented, wherein the apparatus comprises i) an input interface unit configured to providing process data indicative of at least a part of the performed production process for producing the polyurethane foam, ii) a processor configured to a) utilizing a property determination model to determine a material property of the produced polyurethane foam, wherein the material property is indicative of a characteristic of the produced polyurethane foam and wherein the property determination model is a data driven model adapted to determine the material property based on the process data, and b) generating control actions for controlling the production process of the polyurethane foam based on the determined material property, and iii) an output interface unit configured to provide the generated control actions to a distributed control system of the plant. Preferably the generating of the control actions is based on solving an optimization problem that minimizes a difference between one or more target material properties and the values of the determined respective material properties with respect to process variables of the production process, for example, taking predefined ranges of these process variables into account as respective constraints.

In a further aspect, a system for automated production of a polyurethane foam in an extruded foaming thermoplastic polyurethane process is presented, wherein the system comprises a) an apparatus as described above, and b) a production system configured to produce the polyurethane foam in an extruded foaming thermoplastic polyurethane process based on controlling actions received from the apparatus.

In a further aspect, a training apparatus for parameterizing a property determination model is presented, wherein the training apparatus comprises a) a receiving unit configured for receiving historical training data comprising a plurality of process data set and corresponding measured material properties of previously produced polyurethane foams, b) a processor configured for utilizing the received historical training data for parameterizing at least one property determination model such that the parameterized property determination model is adapted to determine at least one material property of the polyurethane foam based on process data, and c) an output unit configured for outputting the parameterized property determination model.

In a further aspect, a computer program product for process automation of a production process is presented, wherein the computer program product comprises program code means for causing the apparatus as described above to execute the method as described above.

In a further aspect, a computer program product for parameterizing a property determination model is presented, wherein the computer program product comprises program code means for causing the training apparatus as described above to execute the training method as described above.

In a further aspect, control actions generated according to the method as described above are presented.

In a further aspect, a use of the method as described above and/or the control actions generated by the method as described above in an extruded foaming thermoplastic polyurethane process is presented.

In a further aspect, a computer-implemented method for process automation of an extruded foaming thermoplastic polyurethane process comprising at least a mixing step in an extruder and a decompression step is presented, wherein the method comprises the steps of a) providing, via an input unit, process data of the extrusion step, preferably, referring to a ratio of blowing agent to polymer, ratio of talc to polymer, rotational speed of the extruder, and/or temperature and pressure profile inside the extruder, b) providing, via an input unit, precursor data of polymeric material to be processed, preferably referring to a melting point, polymer melt flow rate, molecular weight distribution, density and/or tensile strength, c) providing, via a simulation module utilizing a property determination model, at least one predicted material property, preferably, referring to a foam bulk density, tensile strength, and/or shape parameters, d) determining, via a comparison module, whether the predicted material property is within a desired threshold relative to physical and/or soft sensor measurements of the material property or a predetermined range for one or more material properties, wherein if the comparison results in that the condition is not fulfilled the property determination model is retrained until the condition is fulfilled, i.e. accuracy is obtained, and steps c) and d) are continued with the retrained model.

In a further aspect, an apparatus for process automation of an extruded foaming thermoplastic polyurethane process is presented, wherein the apparatus comprised a) a simulation module utilizing a property determination model for determining at least one material property, preferably, a foam bulk density, tensile strength and/or shape factor, b) a training module using historical data having executable instructions for training and validating property determination models with respect to determining material properties, wherein the property determination models preferably refer to pure data driven models based on machine learning algorithms, or hybrid models based on combinations of data driven and first principles models, c) a comparison module configured to determine whether the determined material property is within a desired region relative to a physical and/or soft sensor measured material property or a predetermine range for acceptance of the material property, wherein this comparison provides a validation check for the property determination models for triggering a model retraining process, d) an optimization module having executable instructions for determining optimal process variables within technical feasible boundaries, wherein the optimization module, preferably, reduces a difference of one or more target values for product properties and the determined material properties by finding appropriate process variable values simultaneously, preferably, for the extruder temperature and/or pressure profile, rotation speed, temperature and/or pressure in the underwater pelletizer, wherein the optimization module is configured to send the determined process variable values to the control module, and e) a control module configured to control the present operating state of the production process based on the determined optimal conditions, in particular, based on the determined temperature and pressure in the underwater pelletizer.

It shall be understood that the method as described above, the apparatus as described above, the computer program product as described above, and the system comprising the apparatus as described above have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiment described hereafter.

### BRIEF DESCRIPTION OF DRAWINGS

- Fig. 1: shows schematically and exemplarily a system for automated production of a polyurethane foam according to the invention,
- Fig. 2: shows schematically and exemplarily a flowchart of a method for automated production of a polyurethane foam according to the invention,
- Fig. 3: shows schematically and exemplarily a training method for training a property determination model utilizable in the invention, and
- Fig. 4: shows schematically and exemplarily a flowchart of a more detailed embodiment of the invention.
- Fig. 5: shows schematically and exemplarily a typical extruded foaming thermoplastic polyurethane process

### DETAILED DESCRIPTION OF EMBODIMENTS

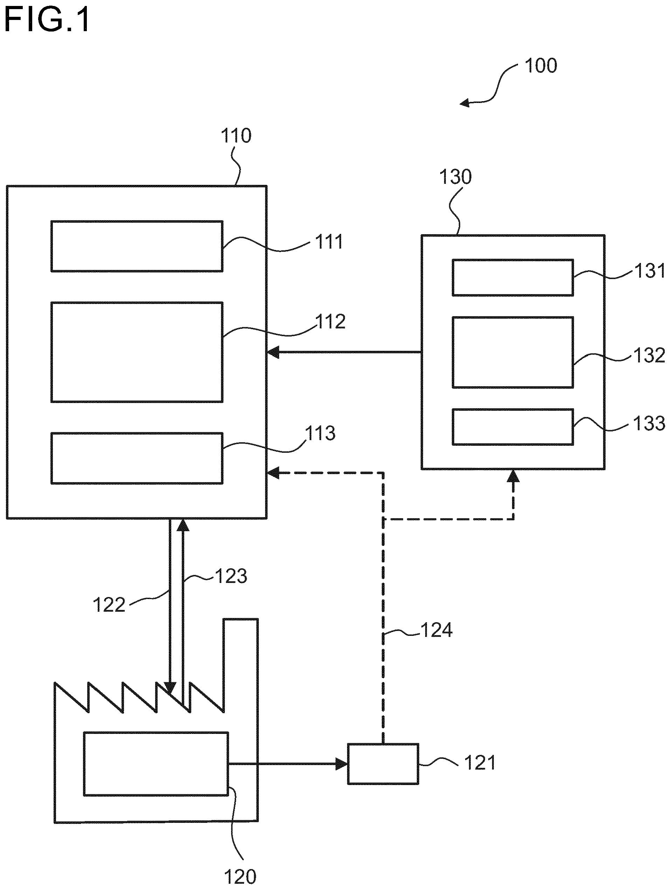

Fig. 1 shows schematically and exemplarily a system 100 for automated production of a polyurethane foam in an extruded foaming thermoplastic polyurethane process. The system 100 comprises a production system 120 configured to produce the polyurethane foam in an extruded foaming thermoplastic polyurethane process provided, for example, in a production plant. Further, the system 100 comprises an apparatus 110 for process automation of the production process for producing the polyurethane foam 121. Optionally the system 100 can further comprise a training apparatus for training and/or retraining a property determination model that can be utilized in the apparatus 130.

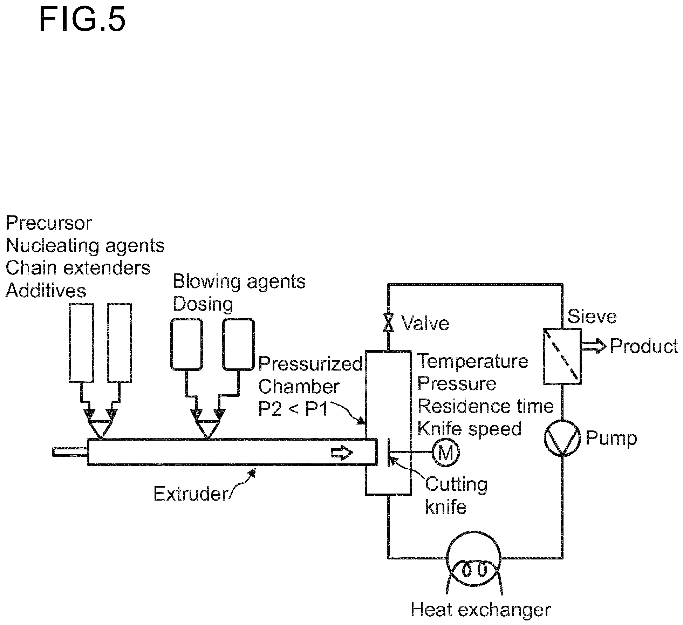

The production system 120 can refer to any production system that allows to perform an extruded foaming thermoplastic polyurethane process to produce a polyurethane foam. Examples for such a process are described, for instance, in the documents EP1266928A1, US5605937, and WO2013153190. Moreover, Fig. 5 shows schematically and exemplarily a typical extruded foaming thermoplastic polyurethane process. In a typical extruded foaming thermoplastic polyurethane process, nucleation agents, chain extenders, and other additives are fed in adequate proportions to an extruder. A typical extruder configuration begins with a melting zone followed by alternating conveying and mixing zones. Based on the requirement of the materials, blowing agents are injected into the extruder where these are mixed with the polymeric material. This is a physical driven step where factors such as: type of blow agents, temperature, pressure, energy input, and residence time can have a high impact on the produced foam. Optionally, after the mixing step a pelletizer is provided in which the polymeric material is chopped in small pieces while it is depressurized and cooled down. The combination of all these factors are responsible for density, morphology and closed skin of the foam particles.

The apparatus 110 comprises an input interface unit 111, a processor 112 and an output interface unit 113. The input interface unit can be realized in form of any kind of interface unit that allows to interface with the apparatus 110. In particular, the interface unit is configured to provide data to the processor that has been received from sources outside of the apparatus 110. In particular, the input interface unit is configured to receive and provide process data indicative of at least a part of the performed production process for producing the polyurethane foam, for example, as described above. In particular, the process data can be based on or comprise control data utilize for controlling the production process of the polyurethane foam, measurement data measured by sensors during the production process of the polyurethane foam and/or virtual sensor data provided from virtual sensors that derive sensor data from the measurement data of other sensors. Preferably the process data comprises at least one of a ratio between blowing agent and polymer, a ratio between talc and polymer, a rotational speed of an extruder, a temperature profile inside an extruder, and a pressure profile inside an extruder. Preferably, the process data comprises process information from the feeding, extrusion, and optionally also from pelletizer units used for the foam production. For example, respective sensors can be provided that can measure one or more process parameters as part of the process data. Moreover, it is preferred that as additional parameters precursor data characterizing precursor properties are utilized. Preferably, the production system performing the extruded foaming thermoplastic polyurethane process comprises at least two process parameters that can be manipulated, i.e. controlled, in order to run a stable process and to obtain stable foam properties, like for instance, a density or bead size. However, also more than two or only one parameter can be utilized for controlling the process and thus as process variables.

Generally the process data received via data flow 123 is provided to the processor 112. The processor 112 is then configured to utilize a property determination model to determine one or more material properties of a produced polyurethane foam 121. In particular, the determined material property is indicative of a characteristic of the produced polyurethane foam. Preferably the determined material property refers to at least one of a foam bulk density, a tensile strength and a shape parameter of the produced polyurethane foam 121. The utilized property determination model is a data driven model adapted to determine the material property based on the process data. Generally, the property determination model can refer to any data driven model that can be parameterized based on historical data. However, it is preferred that the data driven property determination model refers to a machine learning based model and can be based on any known machine learning algorithm, for instance, can be based on a neural network, a decision tree algorithm, a random forest algorithm, a regression algorithm, etc. Preferred algorithms are linear regression and ALAMO constrained regression algorithms.

The data driven property determination model can then be trained utilizing, for instance, the training apparatus 130. The training apparatus 130 is adapted to train a property determination model and comprises a receiving unit 131, a processor 132 and an output unit 133. The receiving unit 131 can refer to or can be communicatively coupled to a respective storage unit storing historical training data or data that can be utilized as historical training data and can be adapted for providing and optionally selecting the respective historical training data. Moreover, optionally the receiving unit 131 can also directly receive measured material property data, via optional data flow 124, that has directly been measured from a produced polyurethane foam 121. Such measured material property data can then together with corresponding process data again be utilized as training data either for training a new property determination model or for retraining an already existing property determination model as will be described later in more detail. Generally, the training data utilized for training the property determination model comprises a plurality of data sets, wherein a data set comprises at least one process data value and a corresponding measured or otherwise derived material property of the produced polyurethane foam. Generally, the training data can be selected such that for determining different material properties different property determination models are trained and then utilized. However, the training data can also be selected such that the trained property determination model is later adapted to determine more than one material property. The processor 132 is then adapted to train the data driven property determination model. The training is performed, in particular, by providing the historicaltraining data as input to the trainable property determination model until the trainable property determination model is trained to determine a material property based on the respectively provided process data. Generally, all knowing training methods for training a respective trainable machine learning based model can be utilized for training the property determination model. For example, the training algorithm can be selected based on the amount of the process data or the existence of variables with integer values in the trainable property determination model. Preferable methods that are utilized are based on a Newton's method, in particular, on gradient descent methods. Gradient descent methods are most suitable for trainable property determination models with a large number of trainable parameters. A such trained property determination model can then be stored, for instance, on a model database together with an identification that indicates for which kind of polyurethane foam, which kind of production system, which kind of process data and which kind of material properties the model can be utilized. The output unit 133 can then be configured to provide the respectively trained model, for example, to the storage, or directly to the apparatus 110. Such trained model is then utilized by processor 112 for determining based on the provided process data the material property of the polyurethane foam 121.

Further, the processor 112 is configured to generate control actions for controlling the production process 120 of the polyurethane foam based on the determined material property. In particular, predetermined or learned rules can be utilized for generating the control actions based on the determined material property. In particular, the processor can be configured to determine if the determined material properties deviate from predetermined criterions, in particular, from predetermined target properties of the polyurethane foam. In case of a deviation the processor can be configured to invoke, for instance, an optimization routine configured to optimize at least one process variable of the production system 120 to minimize the deviation, in particular, to allow to produce a polyurethane foam that meets the target material properties within predetermined limits. The optimization routine can utilize, for example, Lagrange multiplier methods, quadratic programming methods, or interior point methods, among others, for optimizing the at least one process variable with respect to the determined property of the polyurethane foam. Generally, during the optimization also known constrains can be taken into account, for instance, based on respective system specifications or information from historical constrains.

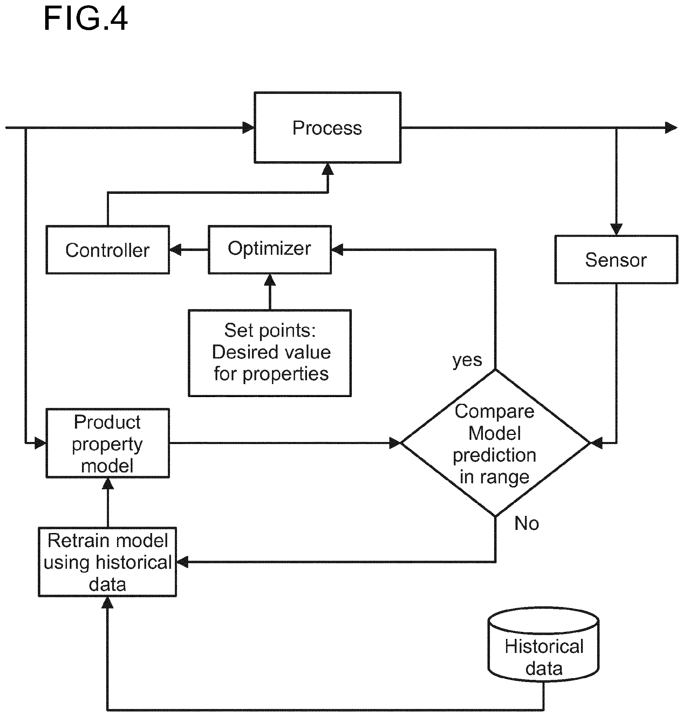

The such generated control actions can then be provided by the output interface unit 113, for instance, via data flow 122 to the production plant and can be implemented into the production process 120. Generally, the control actions can be implemented directly, for example, via a production automation system managing the production process 120 or can first be provided to a user for verification, wherein the user can then decide whether to implement or not respective control actions. The polyurethane foam 121 is then produced in accordance with the implemented production process. Optionally, as will also be described with respect to Fig. 4, in more detail, in regular time intervals the produced polyurethane foam 121 can be subject to measurement procedures to measure or derive respective material properties of the polyurethane foam 121, for example, in form of quality checks. These measurement data of the material properties can together with the corresponding process data utilized for producing the polyurethane foam that has been measured be again provided, for example, to the training apparatus 130 for training the model or to the apparatus 110. The processor 112 can be configured to compare based on the provided measured material property of the polyurethane foam 121 the accuracy of the property determination model utilized for determine the material property of the polyurethane foam. For example, if the determined material property deviates from the measured material property, in particular, if the deviation lies above predetermined limits, the processor 112 can be configured to initialize a retraining process for retraining the property determination model. The retraining can then be performed, for example, again by the apparatus 130 based on the received measured material property data that caused the retraining of the property determination model. More details on this optimization process will be described with respect to Fig. 4.

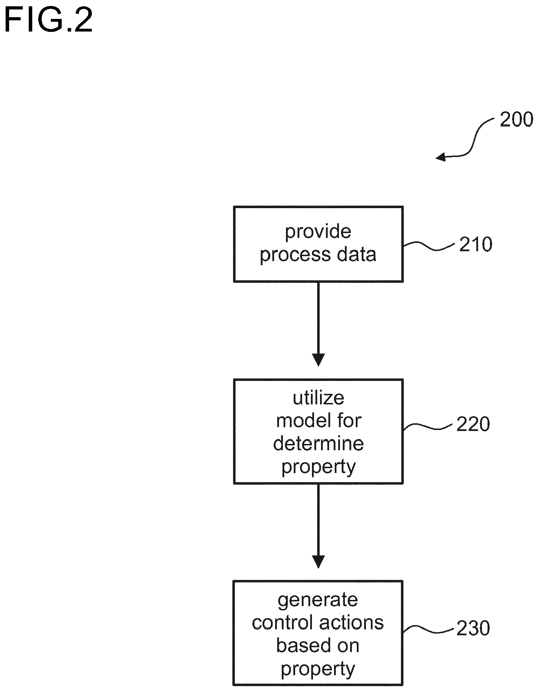

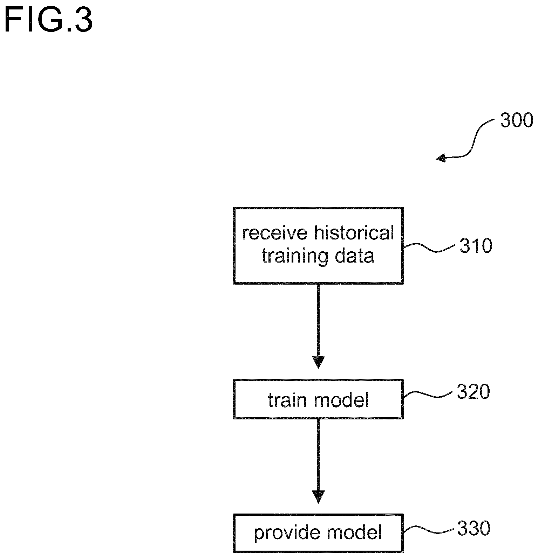

Fig. 2 shows schematically and exemplarily a flowchart of a method for process automation of a production process referring to an extruded foaming thermoplastic polyurethane process for producing a polyurethane foam. In particular, the method 200 can be performed by the apparatus 120 as described with respect to Fig. 1. The method 200 comprises in step 210 providing process data, for instance, as described above with respect to production process 120. Further, the method 200 comprises in step 220 utilizing a property determination model to determine a material property of a produced polyurethane foam. The property determination model can, for example, be trained by the apparatus 130 as described with respect to Fig. 1, in particular, in accordance with the training method as described below with respect to Fig. 3. In a further step 230 the method 200 then comprises generating control actions for controlling the production process of the polyurethane foam based on the determined material property.

Fig. 3 shows schematically and exemplarily a flowchart of a method 300 for training, in particular, parameterizing, a property determination model that can be utilized by the apparatus or method as described above. In a first step 310 the method 300 comprises receiving historical training data, wherein the historical training data comprise a plurality of data sets. Each data set comprises at least one material property of a polyurethane foam associated with process data, i.e. values of one or more process variables, measurement values, etc. associated with the production process of the polyurethane foam. In a next step 320 the material property determination model is trained based on the historical training data, for example, in accordance with the processes described with respect to the apparatus 130 in Fig. 1. In particular any known training algorithm for training respective data driven models can be utilized. In the last step 330 the such trained property determination model is then provided, for instance, to a storage unit to be stored or can directly be provided, for example, to an apparatus 110 for being utilized in a method as described with respect to Fig. 2.

Fig. 4 shows schematically and exemplarily an exemplary scheme for an optimization algorithm that can be utilized in a process automation according to the invention. In the example shown in Fig. 4, the production process is performed under the control of a controller utilizing respective control data, for example, indicating to which values process parameter are to be set. Generally, the production process refers to an extruded foaming thermoplastic polyurethane process that produces a polyurethane foam. One or more sensors, in particular, soft sensors, measure one or more quantities associated with a production process. The such determined measurement data can, for example, in addition to the utilized control data, be provided as process data to a storage. Moreover, sensors can also be utilized to measure a material property of a produced polyurethane foam, for instance, during a quality check. Further, the process data comprising the control data and/or the measurement data of the production process can be utilized by a property determination model, i.e. product property model, that is configured to determine a material property of the polyurethane foam, for instance, in accordance with the principles described above. The measured material properties provided by the sensors can then be utilized to compare the predicted material properties with the measured material properties to determine if the prediction of the property determination model is within a predetermined range, in particular, provides a predetermined accuracy. If the property determination does not provide a desired accuracy, i.e. if the deviation between the determined material property and the measured material property lies above a predetermined threshold ("NO" in Fig. 4), the property determination model can be retrained utilizing historical data, for instance, utilizing more training data sets for training the property determination model and in particular also incorporating training data corresponding to the case in which the inaccuracy of the property determination model occurred. If the comparison results in that the property determination model is accurate enough, i.e. if the answer is "YES", the material property determination model is utilized by an optimizer to optimize the production process. In particular, the determined material property is compared by the optimizer with a target material property and if a deviation is determined the optimizer utilizes an optimization routine to minimize the deviation until the set points, i.e. target material properties, are met. Such determined control data can then be provided in form of control actions to the controller to be implemented into the production process.

Controlling the performance of an extruded foaming thermoplastic polyurethane process can be achieved though utilizing a process automation system that execute an algorithm that can take into account, for instance, precursor characteristics, process variables, historical data and/or soft sensor information. Generally, the process variables can comprise at least one of a ratio of blowing agent to polymer, a rotational speed of an extruder, a residence time, a temperature profile, a temperature and decompression ratio at a die plate, and a temperature of a cooling bad immediately after the die plate. However, the process variables can also refer to other parameters or components of the production process, for example, can refer to parameters of utilized heat exchangers, pumps, etc. Values of the process variables are normally fixed during commissioning of a respective production plant and set according to design specification. Such a process is described in detail for instance in US 9884947 B2, US 10137601 B2, and WO 2015123961 A1. Normally the set process variable values can change periodically by manually reprograming the process automation system, which can be necessary, for example, due to changes in quality of the polymeric material, i.e. precursor used in the process. However, the above described process often does not lead to the desired results in quality of the produced foam orto unnecessary waste production, if the process variables are not adapted fast enough when circumstances of the production process change.

The present invention thus refers, in particular, to allowing to provide a more advanced type of process automation system that can utilize historical data, for example, information of physical and/or soft sensors, process variables, etc. associated with respective material properties of a produced foam to train a property determination model. A such trained property determination model can then be utilized for estimating the proper process conditions, i.e. process variables, to achieve desired product properties of the produced foam, for instance, in order to counteract changing precursor properties. The property determination model is generally trained until an accuracy criterion is fulfilled. This property determination model can later be used in a process that allows to estimate new values for process variables referring to flows, temperatures, pressure, etc. in order to optimize the product properties. Moreover, the process automation method according to the invention can further comprise steps that allow to learn from current process and/or precursor data and adjust its operating point in order to optimize product properties.

In a preferred embodiment of the present invention, the computer-implemented method for process automation as described above comprises utilizing process data, in particular, quantities corresponding to the extrusion step and to the extruder, precursor data, in particular quantities associated with raw material, and optionally measurement data of material properties to online check the validity of currently used property determination model. Generally, the foaming process consist of an extruder where one or more blowing agents, chain extender, and nucleation additives are mixed with the polymeric material. After this step the foamed polymer is pelletized and decompressed producing a polymeric foam. Foam properties at this point of the process can be measured to be correlated with property determination models that can relate, for example, precursor properties and/or process conditions with product properties. In a preferred embodiment, the property determination model is based on a machine learning algorithm, being a linear or quadratic regression. In particular, since these algorithms allow to reduce the computational resources utilized during an optimization step. Generally, first the property determination model can be trained offline based on historical data, this process is automated in a dedicated unit which can also be used for future retraining of the model. Once the property determination model is implemented, current and past process conditions, e.g. in form of process data, are taken and can be used to predict a value for one or more target properties, for instance product bulk density. In a preferred embodiment, a comparison between the determined current product property or properties and the predicted, i.e. determined, properties is done, wherein such a comparison can be completed regularly before the property determination model is used for predicting properties and hence, if necessary, the property determination model can be adapted accordingly. If the model or models comprise an accuracy within a preset range, their predictions can be compared with the properties set points, i.e. target values for one or more material properties. If differences are detected and based on property models an optimizer can reduce the difference by modifying process conditions, i.e. process variables, until optimal conditions are achieved, preferably, within constrains given to process variables. These new optimal process conditions, i.e. process variables, can then be sent to the controller to carry out the required process adjustments. The above procedure can then be repeated while the production process is running for providing an optimal control of the production for producing a foam with an improved quality.

In the following a specific example for implementing the above described methods and apparatuses is given with respect to the controlling of an underwater pelletizer using a closed loop optimization apparatus utilizing the above described methods. In particular, the underwater pelletizer is utilized for controlling the bulk density and the size of produced foam beads. In this context, it can be determined that for a specific foam a target bulk density of the foamed material and a minimum size of the polymeric beads should be achieved. Based on historical training data a linear regression model, preferably a linear Elastic-Net Machine learning model, can be trained as property determination model that correlates the bulk density and respective process data and thus allows to determine a bulk density of the foam based on the process data. As basis for the historical training data, for example, process data and corresponding bulk densities collected over a suitable long time period, for instance, one or two years, of performing a respective production process can be utilized. However, also data collected over a shorter time period, for example, a month or a week can be utilized, if the measurements are, for instance, more dense, i.e. provide a higher data density. In a specific realization of the property determination model, for example, the property determination model implemented 16 parameters collected in this way, wherein 12 of the parameters referred to process parameters provided by the process data and 4 corresponded to precursor parameters provided by precursor data. An optimization routine can then be utilized that uses an objective function for reaching the target bulk density, i.e. the set point. In particular, the objective function can be created as the squared difference of a set point and the bulk density determined by the property determination model. Moreover, from the same historical training data, and/or equipment specifications constrains in the form of equations that describe minimum and maximum values for one or more process variables can be determined, for example, for a pressure for a given temperature, and/or a polymer throughput. Preferably, these constrains enclose feasible values for process parameters, e.g. temperature, pressure, and polymer throughput. The optimization function can be created based on one or more of the parameters that can be manipulated during the production process and thus can be utilized as process variables. Preferably, the optimization function is created to optimize the foam property with respect to at least two process variables.

The loop optimization for this example, can then be started by entering the set point, i.e. the target bulk density, in the optimization. The optimization routine then compares the set point with the current bulk density determined by the property determination model. Based on this comparison the optimization routine can then utilize known optimization algorithms to search for process variable values within the feasibility region, i.e. fulfilling the constraints, for, for instance, the temperature, pressure, and throughput, that allow to meet the set point. The values of these process parameters can then be continuously adjusted in order to keep the target bulk density as constant as possible and as equal as possible to the set point.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the disclosed embodiments.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage. Procedures like the providing of the process data, utilizing a property determination model, generating control actions, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a classical computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

The invention refers to a method for process automation of a production process referring to an extruded foaming thermoplastic polyurethane process for producing a polyurethane foam. The method comprises providing process data indicative of at least a part of the performed production process for producing the polyurethane foam. Further, a property determination model is utilized to determine a material property of the produced polyurethane foam, wherein the material property is indicative of at least one characteristic of the produced polyurethane foam and wherein the property determination model is a data driven model adapted to determine the material property based on the process data. Control actions are generated for controlling the production process of the polyurethane foam based on the determined material property. The method allows for an improved automatic control of the production process referring to an extruded foaming thermoplastic polyurethane process.

## Claims

1. A computer-implemented method (200) for process automation of a production process referring to an extruded foaming thermoplastic polyurethane process for producing a polyurethane foam, wherein the method (200) comprises:
providing (210) process data indicative of at least a part of the performed production process for producing the polyurethane foam,
utilizing (220) a property determination model to determine a material property of the produced polyurethane foam, wherein the material property is indicative of at least one characteristic of the produced polyurethane foam and wherein the property determination model is a data driven model adapted to determine the material property based on the process data, and
generating (230) control actions for controlling the production process of the polyurethane foam based on the determined material property.

2. The method according to claim 1, wherein the method further comprises providing a measured material property of the produced polyurethane foam and comparing the measured material property with the determined material property and, if the determined material property lies outside predetermined limits around the measured material property, generating control signals that cause a retraining of the property determination model.

3. The method according to any of claims 1 or 2, wherein the method further comprises a) providing a target material property that has to be met by the produced polyurethane foam, b) comparing the determined material property with the target material property, and c) generating the control actions based on the result of the comparison.

4. The method according to claim 3, wherein the generating of the control actions based on the comparison comprises the use of an optimization routine configured to minimize a deviation between the determined material property and the target material property with respect to one or more process variables of the production process.

5. The method according to claim 4, wherein the optimization is constrained and the values for the constrains are given by technical and safety limits.

6. The method according to any of the preceding claims, wherein the method further comprises providing precursor data indicative of precursor properties of at least one polymeric material utilized in the production process for producing the polyurethane foam and wherein the utilized property determination model is adapted to determine the material property further based on the precursor data.

7. The method according to claim 6, wherein the precursor properties comprise at least one of a melting point of the polymeric material, a polymer melt flow rate, a melt flow ratio, a molecular weight distribution, a density, a bulk density, an amount of free isocyanate (NCO), a tear strength, an elongation to break and a tensile strength.

8. The method according to any of the preceding claims, wherein the method further comprises providing ambient data indicative of ambient conditions to which the polymeric material utilized in the production process is exposed for a certain time period and wherein the utilized property determination model is adapted to determine the material property further based on the ambient data.

9. The method according to claim 8, wherein the ambient data is indicative of a humidity condition to which the polymeric material utilized in the production process is exposed.

10. A training method (300) for parameterizing a property determination model, wherein the training method (300) comprises:
receiving (310) historical training data comprising a plurality of process data and corresponding measured material properties of previously produced polyurethane foams,
utilizing (320) the received historical training data for parameterizing a property determination model such that the parameterized property determination model is adapted to determine a material property of the polyurethane foam based on process data, and
outputting (320) the parameterized property determination model.

11. An apparatus (110) for process automation of a production process referring to an extruded foaming thermoplastic polyurethane process for producing a polyurethane foam, wherein the apparatus (110) comprises:
an input interface unit (111) configured to
providing process data indicative of at least a part of the performed production process for producing the polyurethane foam,
a processor (112) configured to
a) utilizing a property determination model to determine a material property of the produced polyurethane foam, wherein the material property is indicative of a characteristic of the produced polyurethane foam and wherein the property determination model is a data driven model adapted to determine the material property based on the process data, and
b) generating control actions for controlling the production process of the polyurethane foam based on the determined material property, and
an output interface unit (113) configured to provide the generated control actions to a distributed control system of the plant.

12. A system (100) for automated production of a polyurethane foam in an extruded foaming thermoplastic polyurethane process, wherein the system comprises:
an apparatus (110) according to claim 11, and
a production system (120) configured to produce the polyurethane foam (121) in an extruded foaming thermoplastic polyurethane process based on controlling actions received from the apparatus.

13. A training apparatus (130) for parameterizing a property determination model, wherein the training apparatus (130) comprises:
a receiving unit (131) configured for receiving historical training data comprising a plurality of process data set and corresponding measured material properties of previously produced polyurethane foams,
one or more processors (132) configured for utilizing the received historical training data for parameterizing at least one property determination model such that the parameterized property determination model is adapted to determine at least one material property of the polyurethane foam based on process data, and
an output unit (133) configured for outputting the parameterized property determination model.

14. A computer program product for process automation of a production process, wherein the computer program product comprises program code means for causing the apparatus of claim 11 to execute the method according to any of claims 1 to 9.

15. Control actions generated according to the method of any of claims 1 to 9.
